# EUROPEAN PATENT APPLICATION

(11) **EP 4 645 936 A1**
(43) Date of publication of application: **05.11.2025**
(21) Application number: 23909812.2
(22) Date of filing: 23.11.2023
(51) Int. Cl.: H04W 24/02

(54) **INFORMATION PROCESSING METHOD, AND DEVICE AND READABLE STORAGE MEDIUM**

(30) Priority: 29.12.2022 CN 202211717536
(71) Applicant: Datang Mobile Communications Equipment Co., Ltd., Beijing 100085 (CN)
(72) Inventor: ZHAO, Yali, Beijing 100085 (CN); CHEN, Li, Beijing 100085 (CN)
(74) Representative: Dompatent Partnerschaft von Patent- und Rechtsanwälten mbB
(86) International application number: PCT/CN2023/133531
(87) International publication number: WO 2024/139880

(57) **Abstract**

The present disclosure relates to the technical field of communications. Disclosed are an information processing method, and a device and a readable storage medium. The method comprises: according to first information, determining, from among a plurality of BS tables, a BS table that is used by a terminal; or according to second information, determining, from among the plurality of BS tables, a BS table that is used by a target object, wherein the target object comprises one or more of the following: an LCG of the terminal; an LCH of the terminal; and a PDU Set of the terminal.

## Description

### CROSS-REFERENCE TO RELATED APPLICATION

The present disclosure claims the priority of Chinese Patent Application No. 202211717536.6, entitled "INFORMATION PROCESSING METHOD, AND DEVICE, AND READABLE STORAGE MEDIUM" filed on December 29, 2022, the disclosure of which is incorporated herein by reference in its entirety.

### TECHNICAL FIELD

The present disclosure relates to the field of communications technologies, and in particular, to an information processing method, an information processing device, and a readable storage medium.

### BACKGROUND

A 3rd Generation Partnership Project (3GPP) fifth-generation mobile communication (5th-Generation, 5G) system introduces an eXtended Reality (XR) service. XR is divided into the following categories.
(1) Augmented Reality (AR): Seamless Integration of Real World and Virtual World, Half-True Half-False;
(2) Virtual Reality (VR): a virtual world is generated by simulation using a device;
(3) Mixed Reality (MR): including real physical entities and virtual information at the same time.

The XR service is modeled according to a data frame, and the same data frame may be divided into a plurality of packet data units (PDUs). One or more PDUs corresponding to the same information unit form a PDU set (PDU set).

For XR services, to improve accuracy of buffer status reporting (BSR), a plurality of BS tables may be introduced, where the BS table includes a buffer size level corresponding to each quantization level of ae buffer. In a case that there is only one BS table, the BSR report only uses the BS table, but once multiple BS tables are introduced, how the terminal selects the BS table used for BSR reporting from the plurality of BS tables is a technical problem needing to be solved.

### SUMMARY

Embodiments of the present disclosure provide an information processing method and device, and a readable storage medium, to accurately select a BS table used for BSR reporting.

In a first aspect, an information processing method applied to a terminal is provided. The method includes: determining, from a plurality of BS tables according to first information, a BS table used by the terminal; or determining, from a plurality of BS tables according to second information, a BS table used by a target object, wherein the target object includes one or more of following: a Logical Channel Group (LCG) of the terminal; a Logical Channel (LCH) of the terminal; a Packet Data Unit set (PDU Set) of the terminal.

Optionally, the first information includes one or more of following: a BS interval range or a lower limit or an upper limit of a BS corresponding to a BS table configured by a network device or agreed by a protocol; a BS table used by the terminal based on a configuration of the terminal by the network device; a data volume of an LCG or an LCH or a PDU set with a current largest buffer size or with a highest priority of the terminal; a data volume corresponding to a first PDU set of the terminal, wherein the first PDU set is a PDU set that currently needs to report a buffer size; a BSR trigger condition of a current buffer status report BSR of the terminal.

Optionally, the second information includes one or more of following: a BS interval range or a lower limit or an upper limit of a BS corresponding to a BS table configured by a network device or agreed by a protocol; a BS table configured by a network device based on an LCH or an LCG or a PDU set; a buffer size of each LCG or each LCH of the terminal; a buffer size of each PDU Set or each type of PDU set of the terminal.

Optionally, when the first information includes the BS interval range or the lower limit or the upper limit of the BS corresponding to a BS table configured by the network device or agreed by a protocol, determining, from the plurality of BS tables according to the first information, a BS table used by the terminal includes one or more of the following: comparing a buffer size of a LCG corresponding to the LCH having the highest priority with the BS interval range or the lower limit or the upper limit of the BS corresponding to the BS table, and determining, according to a result of the comparison the BS table used by the terminal; comparing a buffer size of the LCG having the maximum buffer size with the BS interval range or the lower limit or the upper limit of the BS corresponding to the BS table, and determining, according to a result of the comparison, the BS table used by the terminal; comparing the buffer size corresponding to the first PDU set with the BS interval range or the lower limit or the upper limit of the BS corresponding to the BS table, and determining, according to a result of the comparison, the BS table used by the terminal.

Optionally, when the first information includes a data volume of an LCG or an LCH or a PDU set with a current largest buffer size or with a highest priority of the terminal, determining, from the plurality of buffer status quantization table BS tables according to the first information, the BS table used by the terminal includes: comparing the data volume of the LCG or the LCH or the PDU set having the current largest buffer size or the highest priority of the terminal with a maximum BS value of the plurality of BS tables; from the plurality of BS tables, selecting, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

Optionally, when the first information includes the data volume corresponding to a first PDU set of the terminal, determining, from the plurality of BS tables according to the first information, the BS table used by the terminal includes: comparing the data volume of the first PDU set with the maximum BS value of the plurality of BS tables; from the plurality of BS tables, selecting, as the BS table used by the terminal, a BS table in which the maximum BS value is greater than or equal to the data volume of the first PDU Set and difference between the maximum BS value and a data volume of the first PDU set is minimum.

Optionally when the first information includes the BSR trigger condition corresponding to the current BSR of the terminal, determining, from the plurality of BS tables according to the first information, a BS table used by the terminal includes: when the BSR trigger condition includes that remaining PDU set delay budget (PSDB) of a PDU set is lower than a preset threshold, using a BS table corresponding to a second PDU set as the BS table used by the terminal, or determining the BS table used by the terminal according to the data volume in the second PDU set and the BS interval range or the lower limit or the upper limit of the BS corresponding to a BS table; wherein the remaining PSDB of the second PDU set is lower than a preset threshold.

Optionally, when the second information includes the BS interval range or the lower limit or the upper limit of the BS corresponding to a BS table configured by the network device or agreed by the protocol, determining, from the plurality of BS tables according to the second information, the BS table used by the target object includes: comparing the buffer size of each LCH or LCG or PDU set with the BS interval range or the lower limit or the upper limit of the BS corresponding to a BS table; determining, according to a result of the comparison, the BS table used by each LCH or LCG or PDU set.

Optionally, when the second information includes a buffer size of each LCG or each LCH of the terminal, determining, from the plurality of BS tables according to the second information, the BS table used by the target object includes: comparing the buffer size of each LCG or LCH with the maximum BS value of the plurality of BS tables; from the plurality of BS tables, selecting, as the BS table used by the target object, a BS table in which the maximum BS value is greater than or equal to the buffer size of each LCG or LCH and difference between the maximum BS value and the buffer size of each LCG or LCH is minimum.

Optionally, when the second information includes the buffer size of each PDU set or each type of PDU set of the terminal, determining, from the plurality of BS tables according to the second information, the BS table used by the target object includes: comparing the buffer size of each PDU set or each type of PDU set with the maximum BS value of the plurality of BS tables; from the plurality of BS tables, selecting, as the BS Table used by the terminal, a BS table in which the maximum BS value is greater than or equal to the buffer size of each PDU set or each type of PDU set and difference between the maximum BS value and the buffer size of each PDU set or each type of PDU set is minimum.

Optionally, the method further includes: adding first indication information in a buffer status report media access control control element (BSR MAC CE), wherein the first indication information is used to indicate a BS table corresponding to a BSR MAC CE of the terminal; or adding, in a BSR MAC CE, second indication information for each LCG or each LCH or each PDU set, wherein the second indication information is used to indicate a BS table corresponding to BS information of each LCG or each LCH or each PDU set.

Optionally, the first information and/or the second information are obtained from the network device in one or more of following manners: radio resource control (RRC) signaling; MAC CE; physical layer signaling.

Optionally, the first information and/or the second information carry one or more of following identification information: identification information of the LCG;
identification information of the LCH; identification information of the PDU Set.

Optionally, the method further includes triggering the BSR if one or more of following conditions are satisfied: that a BS table used by the terminal changes; that a BS table used by an LCG of the terminal changes; that a BS table used by an LCH of the terminal changes; that a BS table used by the PDU set of the terminal changes.

Optionally, the method further includes: when BS information of different BS tables is carried through different BSR MAC CEs, identifying BS tables corresponding to different BSR MAC CEs through logical channel identifications LCIDs in MAC subheaders corresponding to different BSR MAC CEs or indication fields in the MAC subheaders corresponding to different BSR MAC CEs.

In a second aspect, an information processing method applied to a network device is provided. The method includes: sending first information and/or second information to a terminal, wherein the first information is used by the terminal to determine, from a plurality of Buffer Status quantization tables (BS tables), a BS table used by the terminal, or the second information is used by the terminal to determine, from a plurality of BS tables, a BS table used by a target object, where the target object includes one or more of the following: a Logical Channel Group (LCG) of the terminal; a Logical Channel (LCH) of the terminal; a Packet Data Unit set (PDU Set) of the terminal.

Optionally, the first information includes one or more of the following: a BS interval range or a lower limit or an upper limit of a BS corresponding to a BS table configured by a network device; a BS table used by the terminal based on a configuration of the terminal by the network device; a data volume of an LCG or an LCH or a PDU set with a current largest buffer size or with a highest priority of the terminal; a data volume corresponding to a first PDU set of the terminal, wherein the first PDU set is a PDU set that currently needs to report a buffer size; a BSR trigger condition of a current buffer status report BSR of the terminal.

Optionally, the second information includes one or more of the following: a BS interval range or a lower limit or an upper limit of a BS corresponding to a BS table configured by a network device; a BS table configured by a network device based on an LCH or an LCG or a PDU set; a buffer size of each LCG or each LCH of the terminal; a buffer size of each PDU Set or each type of PDU set of the terminal.

Optionally, sending the first information and/or the second information to the terminal includes sending the first information and/or the second information to the terminal in one or more of the following manners: RRC signaling; MAC CE; physical layer signaling.

Optionally, the first information and/or the second information carry one or more of following identification information: identification information of the LCG; identification information of the LCH; identification information of the PDU Set.

In a third aspect, an information processing device applied to a terminal is provided, wherein the device includes a memory, a transceiver, and a processor, the memory is configured to store a computer program; the transceiver is configured to send and receive data under the control of the processor; and the processor is configured to read the computer program in the memory and perform the following operations: determining, from a plurality of Buffer Status quantization tables (BS tables) according to first information, a BS table used by the terminal; or determining, from a plurality of Buffer Status quantization tables (BS tables) according to second information, a BS table used by a target object, wherein the target object includes one or more of following: a Logical Channel Group (LCG) of the terminal; a Logical Channel (LCH) of the terminal; a Packet Data Unit set (PDU Set) of the terminal.

In a fourth aspect an information processing device applied to a network device is provided, wherein the device includes a memory, a transceiver, and a processor; the memory is configured to store a computer program; the transceiver is configured to send and receive data under the control of the processor; and the processor is configured to read the computer program in the memory and perform the following operations: sending first information and/or second information to a terminal, wherein the first information is used by the terminal to determine, from a plurality of Buffer Status quantization tables (BS tables), a BS table used by the terminal, or the second information is used by the terminal to determine, from a plurality of BS tables, a BS table used by a target object, where the target object includes one or more of the following: a Logical Channel Group (LCG) of the terminal; a Logical Channel (LCH) of the terminal; a Packet Data Unit set (PDU Set) of the terminal.

In a fifth aspect, an information processing device applied to a terminal is provided, wherein the device includes: a first processing unit, configured to determine, from a plurality of Buffer Status quantization tables (BS tables) according to first information, a BS table used by the terminal; or determine, from a plurality of Buffer Status quantization tables (BS tables) according to second information, a BS table used by a target object, wherein the target object includes one or more of following: a Logical Channel Group (LCG) of the terminal; a Logical Channel (LCH) of the terminal; a Packet Data Unit set (PDU Set) of the terminal.

In a sixth aspect, an information processing device applied to a network device, wherein the information processing device includes: a first sending unit, configured to send first information and/or second information to a terminal, wherein the first information is used by the terminal to determine, from a plurality of Buffer Status quantization tables (BS tables), a BS table used by the terminal, or the second information is used by the terminal to determine, from a plurality of BS tables, a BS table used by a target object, where the target object includes one or more of the following: a Logical Channel Group (LCG) of the terminal; a Logical Channel (LCH) of the terminal; a Packet Data Unit set (PDU Set) of the terminal.

In a seventh aspect, a processor-readable storage medium is provided, wherein the processor-readable storage medium stores a computer program, and the computer program is configured to cause a processor to perform the information processing method according to any one according to the above.

In the embodiments of the present disclosure, the terminal may determine the BS table used by the terminal from the plurality of BS tables according to the first information, or determine the BS table used by the target object from the plurality of BS tables according to the second information, so that the terminal may accurately select the required BS table when performing BSR reporting.

### BRIEF DESCRIPTION OF THE DRAWINGS

FIG. 1 is a first flowchart of an information processing method according to an embodiment of the present disclosure;
FIG. 2 is a second flowchart of an information processing method according to an embodiment of the present disclosure;
FIG. 3 is a third flowchart of an information processing method according to an embodiment of the present disclosure;
FIG. 4 is a schematic diagram of an indication of a BS table according to an embodiment of the present disclosure;
FIG. 5 is a schematic diagram of an indication of a BS table according to an embodiment of the present disclosure;
FIG. 6 is a fourth flowchart of an information processing method according to an embodiment of the present disclosure;
FIG. 7 is a schematic diagram of an indication of a BS table according to an embodiment of the present disclosure;
FIG. 8 is a first structural diagram of an information processing device according to an embodiment of the present disclosure;
FIG. 9 is a second structural diagram of an information processing device according to an embodiment of the present disclosure;
FIG. 10 is a third structural diagram of an information processing device according to an embodiment of the present disclosure;
FIG. 11 is a fourth structural diagram of an information processing device according to an embodiment of the present disclosure.

### DETAILED DESCRIPTION

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of' means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the case that there is only one BS table, the BSR report only uses the BS table, but once multiple BS tables are introduced, how the terminal selects the BS table used for BSR reporting from the plurality of BS tables is a technical problem to be solved.

Embodiments of the present disclosure provide an information processing method and device, to accurately select a BS table used for BSR reporting.

The method and the device are based on the same application concept, and because the method and the device solve a similar principle of a problem, the implementation of the device and the method may refer to each other, and details are not described herein again.

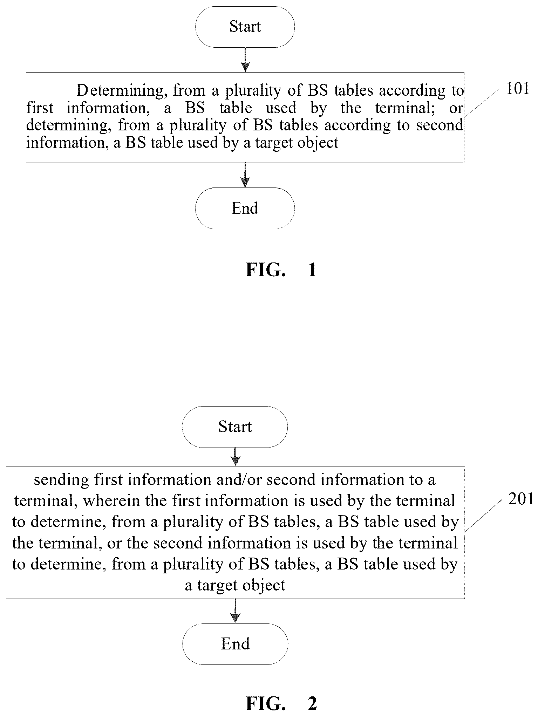

Referring to FIG. 1, FIG. 1 is a flowchart of an information processing method provided by an embodiment of the present disclosure, applied to a terminal. As shown in FIG. 1, the method includes the following steps.

Step 101: determining, from a plurality of BS tables according to first information, a BS table used by the terminal; or determining, from a plurality of BS tables according to second information, a BS table used by a target object, wherein the target object includes one or more of following: an LCG of the terminal; an LCH of the terminal; a PDU Set of the terminal.

In the embodiments of the present disclosure, the first information includes one or more of following: a BS interval range or a lower limit or an upper limit of a BS corresponding to a BS table configured by a network device or agreed by a protocol; a BS table used by the terminal based on a configuration of the terminal by the network device; a data volume of an LCG or an LCH or a PDU set with a current largest buffer size or with a highest priority of the terminal; a data volume corresponding to a first PDU set of the terminal, wherein the first PDU set is a PDU set that currently needs to report a buffer size; a BSR trigger condition of a current BSR of the terminal.

The current BSR refers to a BSR to be reported by the terminal currently.

In the embodiments of the present disclosure, the second information includes one or more of the following: a BS interval range or a lower limit or an upper limit of a BS corresponding to a BS table configured by a network device or agreed by a protocol; a BS table configured by a network device based on an LCH or an LCG or a PDU set; a buffer size of each LCG or each LCH of the terminal; a buffer size of each PDU Set or each type of PDU set of the terminal.

The BS interval range may be understood as a range interval formed by a lower limit of the BS and an upper limit of the BS. The lower limit of the BS and the upper limit of the BS may be set according to actual needs.

In this embodiment of the present disclosure, the first information and/or the second information may be obtained by the terminal from the network device in one or more of the following manners: RRC signaling, MAC CE, and physical layer signaling. Certainly, the above information may also be obtained in other manners, which is not limited in the embodiments of the present disclosure.

In order to facilitate the terminal to determine the BS table used by the LCH or the LCG or the PDU set, the first information and/or the second information carry one or more of the following identification information: identification information of the LCG, identification information of the LCH, and identification information of the PDU set.

In an actual application, the identification information of the LCG may be an LCG identity (LCG identity, LCG ID), the identification information of the LCH may be an LCH identity (LCID), and the identification information of the PDU set may be a PDU set identity (PDU set identity) or a quality of service (QoS) parameter of a PDU set. The embodiments of the present disclosure do not limit the specific form of the identifier, as long as different LCGs, LCHs, or PDU sets can be distinguished.

In the embodiments of the present disclosure, according to different contents included in the first information, the terminal may determine the BS table used by the terminal from the plurality of BS tables according to the first information in different manners.

For example, when the first information includes the BS interval range or the lower limit or the upper limit of the BS corresponding to a BS table configured by the network device or agreed by a protocol, the processing by the terminal includes one or more of the following: comparing a buffer size of a LCG corresponding to the LCH having the highest priority with the BS interval range or the lower limit or the upper limit of the BS corresponding to the BS table, and determining, according to a result of the comparison the BS table used by the terminal; comparing a buffer size of the LCG having the maximum buffer size with the BS interval range or the lower limit or the upper limit of the BS corresponding to the BS table, and determining, according to a result of the comparison, the BS table used by the terminal; comparing the buffer size corresponding to the first PDU set with the BS interval range or the lower limit or the upper limit of the BS corresponding to the BS table, and determining, according to a result of the comparison, the BS table used by the terminal.

In the foregoing process of determining the BS table used by the terminal according to the result of comparison, which manner is specifically used may be according to protocol agreement, and configuration to the terminal by the network, or pre-configuration to the terminal by the network. For example, the protocol may agree that the terminal may select, from the plurality of BS tables, a BS table with the maximum BS value greater than or equal to the data volume and with the difference between the maximum BS value and the data volume being the smallest as the BS table used by the terminal.

When the first information includes a data volume of an LCG or an LCH or a PDU set with a current largest buffer size or with a highest priority of the terminal, the terminal may compare the data volume of the LCG or the LCH or the PDU set having the current largest buffer size or the highest priority of the terminal with a maximum BS value of the plurality of BS tables; from the plurality of BS tables, select, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

When the first information includes the data volume corresponding to a first PDU set of the terminal, the terminal may compare the data volume of the first PDU set with the maximum BS value of the plurality of BS tables; from the plurality of BS tables, select, as the BS table used by the terminal, a BS table in which the maximum BS value is greater than or equal to the data volume of the first PDU Set and difference between the maximum BS value and a data volume of the first PDU set is minimum.

When the first information includes the BSR trigger condition of the current BSR of the terminal, and when the BSR trigger condition includes that remaining PDU set delay budget (PSDB) of a PDU set is lower than a preset threshold, the terminal uses a BS table corresponding to a second PDU set as the BS table used by the terminal, or determines the BS table used by the terminal according to the data volume in the second PDU set and the BS interval range or the lower limit or the upper limit of the BS corresponding to a BS table; wherein the remaining PSDB of the second PDU set is lower than a preset threshold. The preset threshold may be set according to requirements.

In the embodiments of the present disclosure, according to different contents included in the second information, the terminal may determine the BS table, used by the target object, from the plurality of BS tables according to the second information in different manners:
when the second information includes the BS interval range or the lower limit or the upper limit of the BS corresponding to a BS table configured by the network device or agreed by the protocol, the terminal may compare the buffer size of each LCH or LCG or PDU set with the BS interval range or the lower limit or the upper limit of the BS; determine, according to a result of the comparison, the BS table used by each LCH or LCG or PDU set;
when the second information includes a buffer size of each LCG or each LCH of the terminal, the terminal may compare the buffer size of each LCG or LCH with the maximum BS value of the plurality of BS tables; from the plurality of BS tables, select, as the BS table used by the target object, a BS table in which the maximum BS value is greater than or equal to the buffer size of each LCG or LCH and difference between the maximum BS value and the buffer size of each LCG or LCH is minimum;
when the second information includes the buffer size of each PDU set or each type of PDU set of the terminal, the terminal may compare the buffer size of each PDU set or each type of PDU set with the maximum BS value of the plurality of BS tables; from the plurality of BS tables, select, as the BS Table used by the terminal, a BS table in which the maximum BS value is greater than or equal to the buffer size of each PDU set or each type of PDU set and difference between the maximum BS value and the buffer size of each PDU set or each type of PDU set is minimum.

The foregoing merely illustrates a process of determining a corresponding BS table according to the first information or the second information, and a person skilled in the art may further perform certain changes or variations on the basis of the foregoing processing manner.

In the embodiments of the present disclosure, the terminal may determine the BS table, used by the terminal, from the plurality of BS tables according to the first information, or determine the BS table, used by the target object, from the plurality of BS tables according to the second information, so that the terminal may accurately select the required BS table when performing BSR reporting.

Optionally, based on the foregoing embodiment, the terminal may further add first indication information in a buffer status report media access control control element (BSR MAC CE), wherein the first indication information is used to indicate a BS table corresponding to a BSR MAC CE of the terminal; or the terminal may add, in a BSR MAC CE, second indication information for each LCG or each LCH or each PDU set, wherein the second indication information is used to indicate a BS table corresponding to BS information of each LCG or each LCH or each PDU set. In this way, the network device my accurately determine a BS table used by the terminal, or a BS table used by each LCG or LCH or PDU set.

Optionally, on the basis of the foregoing embodiment, the terminal may further enable BS information of different BS tables to be carried by using different BSR MAC CEs, in this case, the terminal may identify the BS table corresponding to different BSR MAC CEs through LCIDs in MAC subheaders corresponding to different BSR MAC CEs or indication fields in the MAC subheaders, thereby increasing indication flexibility.

Optionally, based on the foregoing embodiment, the terminal may further trigger the BSR when one or more of the following cases are satisifed:
that a BS table used by the terminal changes;
that a BS table used by an LCG of the terminal changes;
that a BS table used by an LCH of the terminal changes;
that a BS table used by the PDU set of the terminal changes.

Referring to FIG. 2, FIG. 2 is a flowchart of an information processing method provided by an embodiment of the present disclosure, the method is applied to a network device, such as a base station. As shown in FIG. 2, the method includes the following steps.

Step 201: sending first information and/or second information to a terminal, wherein the first information is used by the terminal to determine, from a plurality of BS tables, a BS table used by the terminal, or the second information is used by the terminal to determine, from a plurality of BS tables, a BS table used by a target object, where the target object includes one or more of the following:
a Logical Channel Group (LCG) of the terminal;
a Logical Channel (LCH) of the terminal;
a Packet Data Unit set (PDU Set) of the terminal.

For explanations of the first information or the second information, refer to the descriptions of the foregoing method embodiments.

In this step, the network device may send the first information and/or the second information to the terminal in one or more of the following manners: RRC signaling, MAC CE, and physical layer signaling.

In the embodiments of the present disclosure, the terminal may determine the BS table, used by the terminal, from the plurality of BS tables according to the first information, or determine the BS table, used by the target object, from the plurality of BS tables according to the second information, so that the terminal may accurately select the required BS table when performing BSR reporting.

Optionally, in order to facilitate the terminal to determine a corresponding BS table, the first information and/or the second information carry one or more of the following identification information: identification information of the LCG; identification information of the LCH; identification information of the PDU Set.

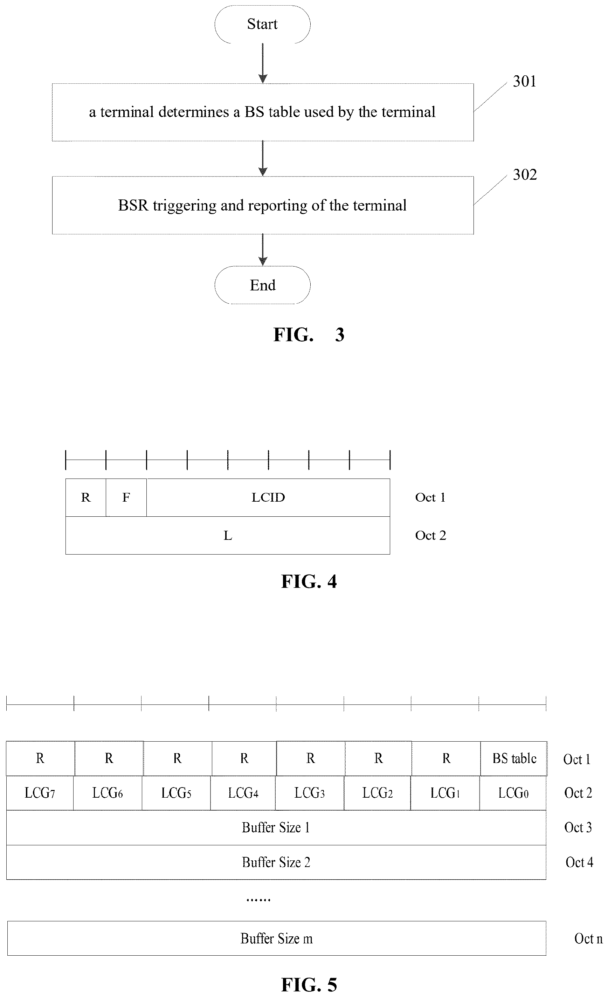

In an embodiment of the present disclosure, the terminal determines a BS table used by the terminal. As shown in FIG. 3, the method may specifically include following steps.

Step 301: a terminal determines a BS table used by a terminal.

When there are a plurality of BS tables, the terminal may determine the BS table corresponding to the terminal based on the first information. The first information may be, but is not limited to, one or more of the following:
a BS interval range or a lower limit or an upper limit of a BS corresponding to a BS table configured by a network device or agreed by a protocol;
a BS table used by the terminal based on a configuration of the terminal by the network device;
a data volume of an LCG or an LCH or a PDU set with a current largest buffer size or with a highest priority of the terminal;
a data volume corresponding to a first PDU set of the terminal, wherein the first PDU set is a PDU set that currently needs to report a buffer size, i.e., the data volume corresponding to the PDU set that currently needs to report a buffer size;
a BSR trigger condition of a current buffer status report BSR of the terminal.

The specific process of determining the BS table corresponding to the terminal according to different information is illustrated as follows.

If the first information includes "a BS interval range or a lower limit or an upper limit of a BS corresponding to a BS table configured by a network device or agreed by a protocol", then, the terminal determines the BS table used by the terminal specifically in one of following manners: that the terminal compares a buffer size of a LCG corresponding to the LCH having the highest priority with the BS interval range or the lower limit or the upper limit of the BS corresponding to the BS table, and determines the BS table used by the terminal; that the terminal compares a buffer size of the LCG having the maximum buffer size with the BS interval range or the lower limit or the upper limit of the BS corresponding to the BS table, and determines the BS table used by the terminal; that the terminal compares the buffer size corresponding to the first PDU set with the BS interval range or the lower limit or the upper limit of the BS corresponding to the BS table, and determines, according to a result of the comparison, the BS table used by the terminal.

If the first information includes "a BS table used by the terminal based on configuration of terminal", then the terminal determines the BS table used by the terminal specifically in the following manner; that the terminal directly determines the BS table used by the terminal according to configuration information.

If the first information includes "a data volume of an LCG or an LCH or a PDU set with a current largest buffer size or with a highest priority of the terminal", then the terminal determines the BS table used by the terminal specifically in a following manner: that the terminal compares the data volume of the LCG or the LCH or the PDU set having the current largest buffer size or the highest priority of the terminal with a maximum BS value of the plurality of BS tables; from the plurality of BS tables, select, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

If the first information includes "the data volume corresponding to the first PDU set of the terminal", the specific implementation manner is as follows: comparing the data volume of the first PDU set with the maximum BS value of the plurality of BS tables; from the plurality of BS tables, selecting, as the BS table used by the terminal, a BS table in which the maximum BS value is greater than or equal to the data volume of the first PDU Set and difference between the maximum BS value and a data volume of the first PDU set is minimum.

If the first information includes the BSR trigger condition of the current BSR of the terminal, then a specific implementation manner is as follows:
when the BSR trigger condition includes that remaining PDU set delay budget (PSDB) of a PDU set is lower than a preset threshold, using a BS table corresponding to a second PDU set as the BS table used by the terminal, or determining the BS table used by the terminal according to the data volume in the second PDU set and the BS interval range or the lower limit or the upper limit of the BS corresponding to a BS table; wherein the remaining PSDB of the second PDU set is lower than a preset threshold.

In this step, the terminal receives the first information from the network device, and the first information may be carried in RRC signaling, MAC CE, or physical layer signaling. If the granularity of the first information is an LCG or an LCH or a PDU set, the first information needs to carry the identification information of the LCG or the identification information of the LCH or the identification information of the PDU set.

Step 302: The terminal triggers the BSR reporting.

When the BSR trigger condition is met, the terminal determines, according to the BS table, the BS value corresponding to each LCG or LCH or PDU set and reports the BSR.

In addition to the BSR trigger condition agreed in the existing protocol, the BSR trigger condition may further include the following new BSR trigger condition: that a BS table corresponding to the terminal changes; or that a BS table corresponding to an LCG of the terminal changes; or that a BS table corresponding to an LCH of the terminal changes; or that a BS table corresponding to the PDU set of the terminal changes.

The BSR MAC CE needs to carry indication information of a BS table, where the indication information of the BS table may be carried in a MAC subheader corresponding to a BSR MAC CE (for example, using N bits in a MAC subheader corresponding to a BSR MAC CE to identify the BS table) or a MAC CE (for example, N bits in a BSR MAC CE are used to identify the BS table, and the N bits may be carried at a beginning or an end of a BSR MAC CE). BS information of different BS tables may be carried in one BSR MAC CE, or may be carried in different BSR MAC CEs.

Taking, as an example, that BS information of different BS tables to be carried in one BSR MAC CE, for example, the indication information of the BS table occupies 1 bit, and the indication information is carried in the MAC sub-header corresponding to the BSR MAC CE, as shown in FIG. 4, the R field in the MAC sub-header may be used to indicate the BS table.

For example, the indication information of the BS table occupies 1 bit, the indication information is carried in the BSR MAC CE, and the format of the BSR MAC CE is shown in FIG. 5, where the BS table field is used to indicate the BS table.

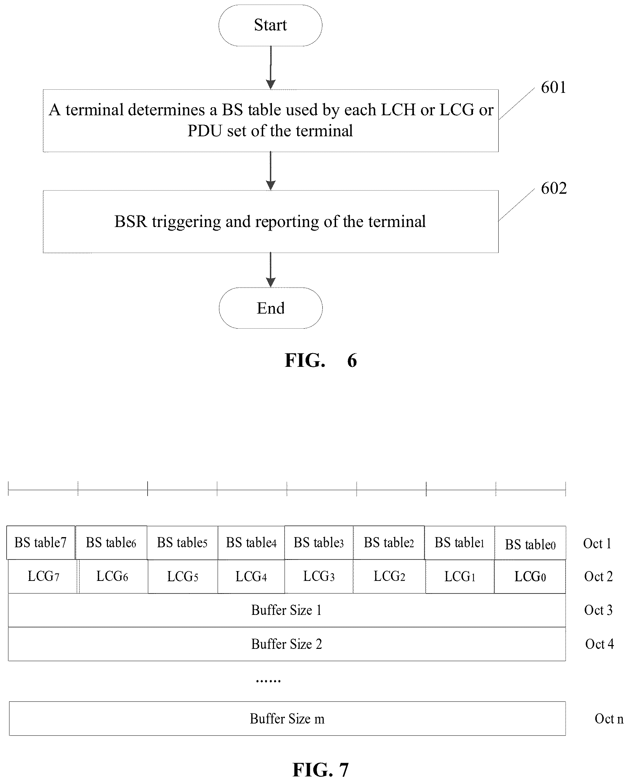

In an embodiment of the present disclosure, the BS Table is determined based on the LCH/LCG/PDU Set. As shown in FIG. 6, the method may specifically include:

Step 601: the terminal determines a BS table used by each LCH or LCG or PDU set of the terminal.

When there are a plurality of BS tables, the terminal determines, based on the second information, a BS table corresponding to the LCG or the LCH or the PDU set of the terminal. The second information may be, but is not limited to, one or more of the following: a BS interval range or a lower limit or an upper limit of a BS corresponding to a BS table configured by a network device or agreed by a protocol; a BS table configured by a network device based on an LCH or an LCG or a PDU set; a buffer size of each LCG or each LCH of the terminal; a buffer size of each PDU Set or each type of PDU set of the terminal.

The specific process of determining the BS table used by each LCH or LCG or PDU set according to different information is illustrated as follows.

When the second information includes "the BS interval range or the lower limit or the upper limit of the BS corresponding to a BS table configured by the network device or agreed by the protocol", that "the terminal determines a BS table used by each LCH or LCG or PDU set of the terminal" specifically is implemented as follows: the terminal compares the buffer size of each LCH or LCG or PDU set with the BS interval range or the lower limit or the upper limit of the BS; the terminal determines the BS table used by each LCH or LCG or PDU set.

When the second information includes "a BS table configured by the network device based on an LCH or an LCG or a PDU set", that "the terminal determines a BS table corresponding to each LCH or LCG or PDU set of the terminal" is specifically implemented as follows: the terminal directly determines the BS table used by or corresponding to the LCH or the LCG or the PDU set of the terminal according to the configuration information.

When the second information includes "a buffer size of each LCG or each LCH of the terminal", that "the terminal determines a BS table corresponding to each LCH or LCG of the terminal" is specifically implemented as follows: the terminal compares the buffer size of each LCG with the maximum BS value of the plurality of BS tables, and from the plurality of BS tables, selects, as the BS table used by each LCG, a BS table in which the maximum BS value is greater than or equal to the buffer size and difference between the maximum BS value and the buffer size is minimum; or, the terminal compares the buffer size of each LCH with the maximum BS value of the plurality of BS tables, and from the plurality of BS tables, selects, as the BS table used by each LCH, a BS table in which the maximum BS value is greater than or equal to the buffer size and difference between the maximum BS value and the buffer size is minimum.

When the second information includes "the buffer size of each PDU set or each type of PDU set of the terminal", that "the terminal determines the BS table corresponding to the PDU Set of the terminal according to the second information" is specifically implemented as follows: the terminal compares the buffer size of each PDU set or each type of PDU set with the maximum BS value of the plurality of BS tables; and from the plurality of BS tables, the terminal selects, as the BS Table used by each PDU set or each type of PDU set, a BS table in which the maximum BS value is greater than or equal to the buffer size and difference between the maximum BS value and the buffer size is minimum.

In this step, the terminal receives the second information from the network device, and the second information may be carried in RRC signaling, MAC CE, or physical layer signaling. If the granularity of the second information is an LCG or an LCH or a PDU set, the first information needs to carry the identification information of the LCG or the identification information of the LCH or the identification information of the PDU set.

Step 602: the terminal performs BSR triggering and reporting.

When the BSR trigger condition is met, the terminal determines, according to the BS table, a BS value corresponding to each LCG or LCH or PDU set and performs BSR triggering and reporting.

In addition to the BSR trigger condition agreed in the existing protocol, the BSR trigger condition may further include the following new BSR trigger condition: if the BS table corresponding to the terminal is changed, or the BS table corresponding to the LCG of the terminal is changed, or the BS table corresponding to the LCH of the terminal is changed, or the BS table corresponding to the PDU set of the terminal is changed, the BSR is triggered.

When "the terminal determines the BS table corresponding to the LCG or the LCH or the PDU set of the terminal according to the second information", the terminal needs to indicate the BS table corresponding to the BS information of the LCG or the LCH or the PDU set for each LCG or LCH in the BSR MAC CE when the terminal generates the BSR MAC CE.

The indication information of the BS table may be carried in the MAC CE corresponding to the BSR MAC CE, and the specific location may be in the front of the LCG field of t he BSR MAC CE, or may be behind the LCG field of the BSR MAC CE.

For example, only two BS tables are used, the indication information of the BS tables occupies 1 bit, the BS table indication field is placed in front of the LCG field, and the schematic diagram of the specific format of the BSR MAC CE is shown in FIG. 7, where the BS table i indicates the BS table corresponding to the LCG i, i is 0, 1, .......

It can be seen from the above description that the solution of the embodiments of the present disclosure can solve the problem of how the terminal uses a plurality of BS tables to report the BSR after multiple BS tables are introduced.

The technical solutions provided in the embodiments of the present disclosure may be applicable to various systems, especially 5G systems. For example, the applicable system may be a Global System of Mobile Communication (GSM) system, a Code Division Multiple Access (CDMA) system, a Wideband Code Division Multiple Access (WCDMA) system, a Long Term Evolution (LTE) system, a Long Term Evolution Advanced (LTE-A) system, a Universal Mobile Telecommunication System (UMTS), a Worldwide Interoperability for Microwave Access (LTE-A) system, a 5G new radio (NR) system, and the like. The plurality of systems each include a terminal device and a network device. The system may further include a core network part, for example, an Evolved Packet System (EPS), a 5G system (5G System, 5 GS), and the like.

The terminal device in the embodiments of the present disclosure may be a device that provides voice and/or data connectivity to a user, a handheld device having a wireless connection function, or another processing device connected to a wireless modem. In different systems, the names of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a network device (a Base Transceiver Station, BTS) in a Global System for Mobile Communications (GSM) or a Code Division Multiple Access (Code Division Multiple Access, CDMA), or may be a 5G base station in a Long Term Evolution (LTE) system, a relay node, a home base station (Femto), a pico base station (Pico), or the like, which is not limited in the embodiments of the present disclosure. In some network structures, the network device may include a centralized unit (CU) node and a distributed unit (DU) node, and the centralized unit and the distributed unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be two-dimensional MIMO (2D-MIMO), three-dimensional MIMO (3D-MIMO), full dimension MIMO (FD-MIMO) or super-large-scale MIMO (Massive-MIMO), or diversity transmission or precoding transmission or beamforming transmission, according to the form and quantity of the root antenna combination.

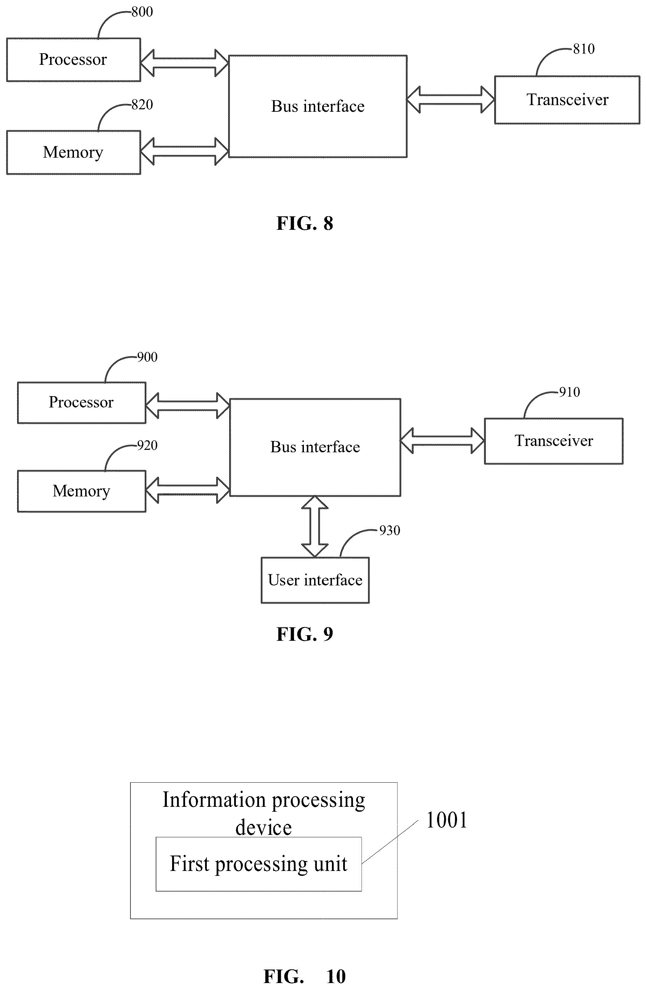

As shown in FIG. 8, an information processing device according to an embodiment of the present disclosure is applied to a network device, and includes: a processor 800, configured to read a program in a memory 820 to perform the following processes:
sending first information and/or second information to a terminal, wherein the first information is used by the terminal to determine, from a plurality of Buffer Status quantization tables (BS tables), a BS table used by the terminal, or the second information is used by the terminal to determine, from a plurality of BS tables, a BS table used by a target object, where the target object includes one or more of the following: a Logical Channel Group (LCG) of the terminal; a Logical Channel (LCH) of the terminal; a Packet Data Unit set (PDU Set) of the terminal.

The transceiver 810 is configured to receive and send data under the control of the processor 800.

In FIG. 8, the bus architecture may include any number of interconnected buses and bridges, and specifically, various circuits of one or more processors represented by the processor 800 and a memory represented by the memory 820 are linked together. The bus architecture may also link various other circuits, such as a peripheral device, a voltage regulator, and a power management circuit, which are well known in the art, and therefore are not further described herein. The bus interface provides an interface. The transceiver 810 may be a plurality of elements, that is, include a transmitter and a receiver, and provide units for communicating with various other devices on a transmission medium. The processor 800 is responsible for managing the bus architecture and general processing, and the memory 820 may store data used by the processor 800 when performing operations.

The processor 800 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 800 is responsible for managing the bus architecture and general processing, and the memory 820 may store data used by the processor 800 when performing operations.

For the meaning of the first information or the second information, referring to the descriptions of the foregoing method embodiments.

The processor 800 is further configured to read the program, and perform the following steps: sending the first information and/or the second information to the terminal in one or more of the following manners: RRC signaling; MAC CE; physical layer signaling.

Optionally, the first information and/or the second information carry one or more of following identification information: identification information of the LCG; identification information of the LCH; identification information of the PDU Set.

It should be noted that, the device provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 9, an information processing device according to an embodiment of the present disclosure is applied to a terminal, and includes: a processor 900, configured to read a program in a memory 920 to perform the following processes:
determining, from a plurality of BS tables according to first information, a BS table used by the terminal; or determining, from a plurality of BS tables according to second information, a BS table used by a target object, wherein the target object includes one or more of following: a LCG of the terminal; a LCH of the terminal; a PDU Set of the terminal.

The transceiver 910 is configured to receive and send data under the control of the processor 900.

In FIG. 9, the bus architecture may include any number of interconnected buses and bridges, and specifically, various circuits of one or more processors represented by the processor 900 and a memory represented by the memory 920 are linked together. The bus architecture may also link various other circuits, such as a peripheral device, a voltage regulator, and a power management circuit, which are well known in the art, and therefore are not further described herein. The bus interface provides an interface. The transceiver 910 may be a plurality of elements, that is, includes a transmitter and a receiver, and provides units for communicating with various other devices on a transmission medium. For different user equipment, the user interface 930 may also be an interface capable of being externally connected to a device needing to be internally connected, and the connected device includes but is not limited to a keypad, a display, a speaker, a microphone, a joystick, and the like.

The processor 900 is responsible for managing the bus architecture and general processing, and the memory 920 may store data used by the processor 900 when performing operations.

The processor 900 may be a CPU, an ASIC, an FPGA, or a CPLD, or the processor may use a multi-core architecture.

The processor invokes the computer program stored in the memory, and is configured to perform any one of the methods provided in the embodiments of the present disclosure according to the obtained executable instruction. The processor and the memory may also be physically separated.

For meaning of the first information or the second information, descriptions of the foregoing method embodiments may be referenced.

When the first information includes the BS interval range or the lower limit or the upper limit of the BS corresponding to a BS table configured by the network device or agreed by a protocol, the processor 900 is further configured to read the program, and perform one or more of the following steps:
comparing a buffer size of a LCG corresponding to the LCH having the highest priority with the BS interval range or the lower limit or the upper limit of the BS corresponding to the BS table, and determining, according to a result of the comparison, the BS table used by the terminal; comparing a buffer size of the LCG having the maximum buffer size with the BS interval range or the lower limit or the upper limit of the BS corresponding to the BS table, and determining, according to a result of the comparison, the BS table used by the terminal; comparing the buffer size corresponding to the first PDU set with the BS interval range or the lower limit or the upper limit of the BS corresponding to the BS table, and determining, according to a result of the comparison, the BS table used by the terminal.

When the first information includes a data volume of an LCG or an LCH or a PDU set with a current largest buffer size or with a highest priority of the terminal, the processor 900 is further configured to read the program, and perform the following steps:
comparing the data volume of the LCG or the LCH or the PDU set having the current largest buffer size or the highest priority of the terminal with a maximum BS value of the plurality of BS tables; from the plurality of BS tables, selecting, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

When the first information includes the data volume corresponding to a first PDU set of the terminal, the processor 900 is further configured to read the program, and perform the following steps:
comparing the data volume of the first PDU set with the maximum BS value of the plurality of BS tables; from the plurality of BS tables, selecting, as the BS table used by the terminal, a BS table in which the maximum BS value is greater than or equal to the data volume of the first PDU Set and difference between the maximum BS value and a data volume of the first PDU set is minimum.

When the first information includes the BSR trigger condition of the current BSR of the terminal, the processor 900 is further configured to read the program, and perform the following steps:
when the BSR trigger condition includes that remaining PDU set delay budget (PSDB) of a PDU set is lower than a preset threshold, using a BS table corresponding to a second PDU set as the BS table used by the terminal, or determining the BS table used by the terminal according to the data volume in the second PDU set and the BS interval range or the lower limit or the upper limit of the BS corresponding to a BS table; wherein the remaining PSDB of the second PDU set is lower than a preset threshold.

When the second information includes the BS interval range or the lower limit or the upper limit of the BS corresponding to a BS table configured by the network device or agreed by the protocol, the processor 900 is further configured to read the program, and perform the following steps:
comparing the buffer size of each LCH or LCG or PDU set with the BS interval range or the lower limit or the upper limit of the BS; determining, according to a result of the comparison, the BS table used by each LCH or LCG or PDU set.

When the second information includes a buffer size of each LCG or each LCH of the terminal, the processor 900 is further configured to read the program, and perform the following steps:
comparing the buffer size of each LCG or LCH with the maximum BS value of the plurality of BS tables; from the plurality of BS tables, selecting, as the BS table used by the target object, a BS table in which the maximum BS value is greater than or equal to the buffer size of each LCG or LCH and difference between the maximum BS value and the buffer size of each LCG or LCH is minimum.

When the second information includes the buffer size of each PDU set or each type of PDU set of the terminal, the processor 900 is further configured to read the program, and perform the following steps:
comparing the buffer size of each PDU set or each type of PDU set with the maximum BS value of the plurality of BS tables; from the plurality of BS tables, selecting, as the BS table used by the terminal, a BS table in which the maximum BS value is greater than or equal to the buffer size of each PDU set or each type of PDU set and difference between the maximum BS value and the buffer size of each PDU set or each type of PDU set is minimum.

The processor 900 is further configured to read the program, and perform the following steps:
adding first indication information in a BSR MAC CE, wherein the first indication information is used to indicate a BS table corresponding to a BSR MAC CE of the terminal; or adding, in a BSR MAC CE, second indication information for each LCG or each LCH or each PDU set, wherein the second indication information is used to indicate a BS table corresponding to BS information of each LCG or each LCH or each PDU set.

Optionally, the first information and/or the second information are obtained from the network device in one or more of the following manners: RRC signaling; MAC CE; physical layer signaling.

Optionally, the first information and/or the second information carry one or more of the following identification information: identification information of the LCG, identification information of the LCH, and identification information of the PDU set.

The processor 900 is further configured to read the program, and perform the following steps:
triggering the BSR if one or more of following conditions are satisfied:
that a BS table used by the terminal changes; that a BS table used by an LCG of the terminal changes; that a BS table used by an LCH of the terminal changes; that a BS table used by the PDU set of the terminal changes.

Optionally, when BS information of different BS tables is carried through different BSR MAC CEs, BS tables corresponding to different BSR MAC CEs are identified through LCIDs in MAC subheaders corresponding to different BSR MAC CEs or indication fields in the MAC subheaders corresponding to different BSR MAC CEs.

It should be noted that, the device provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 10, an information processing device according to an embodiment of the present disclosure is applied to a terminal and includes: a first processing unit, configured to determine, from a plurality of BS tables according to first information, a BS table used by the terminal; or determine, from a plurality of BS tables according to second information, a BS table used by a target object, wherein the target object includes one or more of following: a LCG of the terminal; a LCH of the terminal; a PDU Set of the terminal.

For meaning of the first information or the second information, the descriptions of the foregoing method embodiments may be referenced.

When the first information includes the BS interval range or the lower limit or the upper limit of the BS corresponding to a BS table configured by the network device or agreed by a protocol, the first processing unit is further configured to perform one or more of the following:
comparing a buffer size of a LCG corresponding to the LCH having the highest priority with the BS interval range or the lower limit or the upper limit of the BS corresponding to the BS table, and determining, according to a result of the comparison, the BS table used by the terminal; comparing a buffer size of the LCG having the maximum buffer size with the BS interval range or the lower limit or the upper limit of the BS corresponding to the BS table, and determining, according to a result of the comparison, the BS table used by the terminal; comparing the buffer size corresponding to the first PDU set with the BS interval range or the lower limit or the upper limit of the BS corresponding to the BS table, and determining, according to a result of the comparison, the BS table used by the terminal.

When the first information includes a data volume of an LCG or an LCH or a PDU set with a current largest buffer size or with a highest priority of the terminal, the first processing unit is further configured to:
compare the data volume of the LCG or the LCH or the PDU set having the current largest buffer size or the highest priority of the terminal with a maximum BS value of the plurality of BS tables; from the plurality of BS tables, select, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

When the first information includes the data volume corresponding to a first PDU set of the terminal, the first processing unit is further configured to:
Compare he data volume of the first PDU set with the maximum BS value of the plurality of BS tables; from the plurality of BS tables, select, as the BS table used by the terminal, a BS table in which the maximum BS value is greater than or equal to the data volume of the first PDU Set and difference between the maximum BS value and a data volume of the first PDU set is minimum.

When the first information includes the BSR trigger condition of the current BSR of the terminal, the first processing unit is further configured to:
when the BSR trigger condition includes that remaining PDU set delay budget (PSDB) of a PDU set is lower than a preset threshold, use a BS table corresponding to a second PDU set as the BS table used by the terminal, or determine the BS table used by the terminal according to the data volume in the second PDU set and the BS interval range or the lower limit or the upper limit of the BS corresponding to a BS table; wherein the remaining PSDB of the second PDU set is lower than a preset threshold.

When the second information includes the BS interval range or the lower limit or the upper limit of the BS corresponding to a BS table configured by the network device or agreed by the protocol, the first processing unit is further configured to:
compare the buffer size of each LCH or LCG or PDU set with the BS interval range or the lower limit or the upper limit of the BS; determine, according to a result of the comparison, the BS table used by each LCH or LCG or PDU set.

When the second information includes a buffer size of each LCG or each LCH of the terminal, the first processing unit is further configured to:
compare the buffer size of each LCG or LCH with the maximum BS value of the plurality of BS tables; from the plurality of BS tables, select, as the BS table used by the target object, a BS table in which the maximum BS value is greater than or equal to the buffer size of each LCG or LCH and difference between the maximum BS value and the buffer size of each LCG or LCH is minimum.

When the second information includes the buffer size of each PDU set or each type of PDU set of the terminal, the first processing unit is further configured to:
compare the buffer size of each PDU set or each type of PDU set with the maximum BS value of the plurality of BS tables; from the plurality of BS tables, select, as the BS table used by the terminal, a BS table in which the maximum BS value is greater than or equal to the buffer size of each PDU set or each type of PDU set and difference between the maximum BS value and the buffer size of each PDU set or each type of PDU set is minimum.

Optionally, the device may further include a second processing unit, configured to: \
add first indication information in a BSR MAC CE, wherein the first indication information is used to indicate a BS table corresponding to a BSR MAC CE of the terminal; or add, in a BSR MAC CE, second indication information for each LCG or each LCH or each PDU set, wherein the second indication information is used to indicate a BS table corresponding to BS information of each LCG or each LCH or each PDU set.

Optionally, the first information and/or the second information are obtained from the network device in one or more of the following manners: RRC signaling; MAC CE; physical layer signaling.

Optionally, the first information and/or the second information carry one or more of the following identification information: identification information of the LCG, identification information of the LCH, and identification information of the PDU set.

It should be noted that, the device provided in the embodiments of the present disclosure can implement all method steps implemented in the foregoing method embodiments, and can achieve the same technical effect, and details of the same parts and beneficial effects as those in the method embodiments in this embodiment are not described herein again.

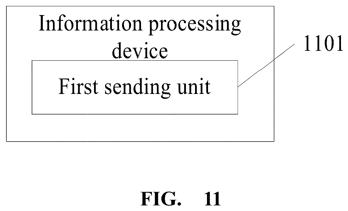

As shown in FIG. 11, an information processing device according to an embodiment of the present disclosure is applied to a network device, and includes a first sending unit, configured to:
send first information and/or second information to a terminal, wherein the first information is used by the terminal to determine, from a plurality of BS tables, a BS table used by the terminal, or the second information is used by the terminal to determine, from a plurality of BS tables, a BS table used by a target object, where the target object comprises one or more of the following:
a Logical Channel Group (LCG) of the terminal;
a Logical Channel (LCH) of the terminal;
a Packet Data Unit set (PDU Set) of the terminal.

For meaning of the first information or the second information, the descriptions of the foregoing method embodiments may be referenced.

Optionally, the first sending unit is further configured to send the first information and/or the second information to the terminal in one or more of the following manners: RRC signaling; MAC CE; physical layer signaling.

Optionally, the first information and/or the second information carry one or more of the following identification information: identification information of the LCG, identification information of the LCH, and identification information of the PDU set.

It should be noted that, the device provided in the embodiments of the present disclosure can implement all method steps implemented in the foregoing method embodiments, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solution of the present disclosure essentially or all or part of the technical solution that contributes to the prior art may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a communication device, including: a memory, a processor, and a program stored in the memory and executable on the processor, where the processor, when executing the program, implements the steps in the information processing method as described above.

An embodiment of the present disclosure further provides a readable storage medium, where a program is stored on the readable storage medium, and when the program is executed by the processor, each process of the foregoing information processing method embodiments is implemented, and the same technical effect can be achieved. The readable storage medium may be any usable medium or data storage device accessible by a processor, including but not limited to a magnetic memory (for example, a floppy disk, a hard disk, a magnetic tape, a magneto-optical disk (DVD), a Blu-ray disk (CD), a Digital Versatile Disk (DVD), a Blu-ray Disk (BD), a High-Definition Versatile Disk (EEPROM), a non-volatile memory (NAND Flash), a Solid State Disk (Solid State Disk or Solid State Drive, SSD), etc.).

A person skilled in the art should understand that the embodiments of the present disclosure may be provided as a method, a system, or a computer program product. Therefore, the present disclosure may take the form of an entire hardware embodiment, an entire software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing device, or may be stored in a memory of the device in a form of program code, and a certain processing element of the device invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

It should be noted that, in this specification, the terms "include", "include", or any other variant thereof are intended to cover non-exclusive inclusion, so that a process, method, article, or device that includes a series of elements includes not only those elements, but also other elements that are not explicitly listed, or elements inherent to the process, method, article, or device. In the absence of more restrictions, the statement " includes one. There are no additional identical elements in the process, method, article, or device that includes the element.

Through the description of the foregoing implementations, a person skilled in the art may clearly understand that the method in the foregoing embodiments may be implemented by means of software plus a necessary general hardware platform, and certainly may also be implemented by hardware, but in many cases, the former is a better implementation. According to such an understanding, the technical solution of the present disclosure essentially or the part contributing to the prior art may be embodied in the form of a software product, and the computer software product is stored in a storage medium (such as a ROM/RAM, a magnetic disk, and an optical disk), and includes several instructions for enabling a terminal (which may be a mobile phone, a computer, a server, an air conditioner, a network device, etc.) to perform the method according to the embodiments of the present disclosure.

The embodiments of the present disclosure are described above with reference to the accompanying drawings, but the present disclosure is not limited to the specific embodiments described above, and the specific embodiments described above are merely illustrative, rather than limiting, and a person of ordinary skill in the art can make many forms without departing from the spirit of the present disclosure and the scope of the claims, all of which are within the protection of the present disclosure.

## Claims

1. An information processing method applied to a terminal, the method comprising:
determining, from a plurality of Buffer Status quantization tables (BS tables) according to first information, a BS table used by the terminal; or
determining, from a plurality of Buffer Status quantization tables (BS tables) according to second information, a BS table used by a target object, wherein the target object comprises one or more of following:
a Logical Channel Group (LCG) of the terminal;
a Logical Channel (LCH) of the terminal;
a Packet Data Unit set (PDU Set) of the terminal.

2. The method according to claim 1, wherein the first information comprises one or more of following:
a BS interval range or a lower limit or an upper limit of a BS corresponding to a BS table configured by a network device or agreed by a protocol;
a BS table used by the terminal based on a configuration of the terminal by the network device;
a data volume of an LCG or an LCH or a PDU set with a current largest buffer size or with a highest priority of the terminal;
a data volume corresponding to a first PDU set of the terminal, wherein the first PDU set is a PDU set that currently needs to report a buffer size;
a BSR trigger condition of a current buffer status report BSR of the terminal.

3. The method according to claim 1, wherein the second information comprises one or more of following:
a BS interval range or a lower limit or an upper limit of a BS corresponding to a BS table configured by a network device or agreed by a protocol;
a BS table configured by a network device based on an LCH or an LCG or a PDU set;
a buffer size of each LCG or each LCH of the terminal;
a buffer size of each PDU Set or each type of PDU set of the terminal.

4. The method according to claim 2, wherein when the first information comprises the BS interval range or the lower limit or the upper limit of the BS corresponding to a BS table configured by the network device or agreed by a protocol, determining, from the plurality of BS tables according to the first information, a BS table used by the terminal comprises one or more of the following:
comparing a buffer size of a LCG corresponding to the LCH having the highest priority with the BS interval range or the lower limit or the upper limit of the BS corresponding to the BS table, and determining, according to a result of the comparison the BS table used by the terminal;
comparing a buffer size of the LCG having the maximum buffer size with the BS interval range or the lower limit or the upper limit of the BS corresponding to the BS table, and determining, according to a result of the comparison, the BS table used by the terminal;
comparing the buffer size corresponding to the first PDU set with the BS interval range or the lower limit or the upper limit of the BS corresponding to the BS table, and determining, according to a result of the comparison, the BS table used by the terminal.

5. The method according to claim 2, wherein when the first information comprises a data volume of an LCG or an LCH or a PDU set with a current largest buffer size or with a highest priority of the terminal, determining, from the plurality of buffer status quantization table BS tables according to the first information, the BS table used by the terminal comprises:
comparing the data volume of the LCG or the LCH or the PDU set having the current largest buffer size or the highest priority of the terminal with a maximum BS value of the plurality of BS tables;
from the plurality of BS tables, selecting, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

6. The method according to claim 2, wherein when the first information comprises the data volume corresponding to a first PDU set of the terminal, determining, from the plurality of BS tables according to the first information, the BS table used by the terminal comprises:
comparing the data volume of the first PDU set with the maximum BS value of the plurality of BS tables;
from the plurality of BS tables, selecting, as the BS table used by the terminal, a BS table in which the maximum BS value is greater than or equal to the data volume of the first PDU Set and difference between the maximum BS value and a data volume of the first PDU set is minimum.

7. The method according to claim 2, wherein when the first information comprises the BSR trigger condition of the current BSR of the terminal, determining, from the plurality of BS tables according to the first information, a BS table used by the terminal comprises:
when the BSR trigger condition comprises that remaining PDU set delay budget (PSDB) of a PDU set is lower than a preset threshold, using a BS table corresponding to a second PDU set as the BS table used by the terminal, or determining the BS table used by the terminal according to the data volume in the second PDU set and the BS interval range or the lower limit or the upper limit of the BS corresponding to a BS table;
wherein the remaining PSDB of the second PDU set is lower than a preset threshold.

8. The method according to claim 3, wherein when the second information comprises the BS interval range or the lower limit or the upper limit of the BS corresponding to a BS table configured by the network device or agreed by the protocol, determining, from the plurality of BS tables according to the second information, the BS table used by the target object comprises:
comparing the buffer size of each LCH or LCG or PDU set with the BS interval range or the lower limit or the upper limit of the BS;
determining, according to a result of the comparison, the BS table used by each LCH or LCG or PDU set.

9. The method according to claim 3, wherein when the second information comprises a buffer size of each LCG or each LCH of the terminal, determining, from the plurality of BS tables according to the second information, the BS table used by the target object comprises:
comparing the buffer size of each LCG or LCH with the maximum BS value of the plurality of BS tables;
from the plurality of BS tables, selecting, as the BS table used by the target object, a BS table in which the maximum BS value is greater than or equal to the buffer size of each LCG or LCH and difference between the maximum BS value and the buffer size of each LCG or LCH is minimum.

10. The method according to claim 3, wherein when the second information comprises the buffer size of each PDU set or each type of PDU set of the terminal, determining, from the plurality of BS tables according to the second information, the BS table used by the target object comprises:
comparing the buffer size of each PDU set or each type of PDU set with the maximum BS value of the plurality of BS tables;
from the plurality of BS tables, selecting, as the BS Table used by the terminal, a BS table in which the maximum BS value is greater than or equal to the buffer size of each PDU set or each type of PDU set and difference between the maximum BS value and the buffer size of each PDU set or each type of PDU set is minimum.

11. The method according to claim 1, further comprising:
adding first indication information in a buffer status report media access control control element (BSR MAC CE), wherein the first indication information is used to indicate a BS table corresponding to a BSR MAC CE of the terminal; or
adding, in a BSR MAC CE, second indication information for each LCG or each LCH or each PDU set, wherein the second indication information is used to indicate a BS table corresponding to BS information of each LCG or each LCH or each PDU set.

12. The method according to claim 1, wherein the first information and/or the second information are obtained from the network device in one or more of following manners:
radio resource control (RRC) signaling;
MAC CE;
physical layer signaling.

13. The method according to claim 12, wherein the first information and/or the second information carry one or more of following identification information:
identification information of the LCG;
identification information of the LCH;
identification information of the PDU Set.

14. The method according to claim 1, further comprising:
triggering the BSR if one or more of following conditions are satisfied:
that a BS table used by the terminal changes;
that a BS table used by an LCG of the terminal changes;
that a BS table used by an LCH of the terminal changes;
that a BS table used by the PDU set of the terminal changes.

15. The method according to claim 1, further comprising:
when BS information of different BS tables is carried through different BSR MAC CEs, identifying BS tables corresponding to different BSR MAC CEs through logical channel identifiers LCIDs in MAC subheaders corresponding to different BSR MAC CEs or indication fields in the MAC subheaders corresponding to different BSR MAC CEs.

16. An information processing method applied to a network device, the method comprising:
sending first information and/or second information to a terminal, wherein the first information is used by the terminal to determine, from a plurality of Buffer Status quantization tables (BS tables), a BS table used by the terminal, or the second information is used by the terminal to determine, from a plurality of BS tables, a BS table used by a target object, where the target object comprises one or more of the following:
a Logical Channel Group (LCG) of the terminal;
a Logical Channel (LCH) of the terminal;
a Packet Data Unit set (PDU Set) of the terminal.

17. The method according to claim 16, wherein the first information comprises one or more of the following:
a BS interval range or a lower limit or an upper limit of a BS corresponding to a BS table configured by a network device;
a BS table used by the terminal based on a configuration of the terminal by the network device;
a data volume of an LCG or an LCH or a PDU set with a current largest buffer size or with a highest priority of the terminal;
a data volume corresponding to a first PDU set of the terminal, wherein the first PDU set is a PDU set that currently needs to report a buffer size;
a BSR trigger condition of a current buffer status report BSR of the terminal.

18. The method according to claim 16, wherein the second information comprises one or more of the following:
a BS interval range or a lower limit or an upper limit of a BS corresponding to a BS table configured by a network device;
a BS table configured by a network device based on an LCH or an LCG or a PDU set;
a buffer size of each LCG or each LCH of the terminal;
a buffer size of each PDU Set or each type of PDU set of the terminal.

19. The method according to claim 16, wherein sending the first information and/or the second information to the terminal comprises sending the first information and/or the second information to the terminal in one or more of the following manners:
RRC signaling;
MAC CE;
physical layer signaling.

20. The method according to claim 16, wherein the first information and/or the second information carry one or more of following identification information:
identification information of the LCG;
identification information of the LCH;
identification information of the PDU Set.

21. An information processing device applied to a terminal, wherein the device comprises a memory, a transceiver, and a processor,
the memory is configured to store a computer program; the transceiver is configured to send and receive data under the control of the processor; and the processor is configured to read the computer program in the memory and perform the following operations:
determining, from a plurality of Buffer Status quantization tables (BS tables) according to first information, a BS table used by the terminal; or
determining, from a plurality of Buffer Status quantization tables (BS tables) according to second information, a BS table used by a target object, wherein the target object comprises one or more of following:
a Logical Channel Group (LCG) of the terminal;
a Logical Channel (LCH) of the terminal;
a Packet Data Unit set (PDU Set) of the terminal.

22. The device according to claim 21, wherein the first information comprises one or more of following:
a BS interval range or a lower limit or an upper limit of a BS corresponding to a BS table configured by a network device or agreed by a protocol;
a BS table used by the terminal based on a configuration of the terminal by the network device;
a data volume of an LCG or an LCH or a PDU set with a current largest buffer size or with a highest priority of the terminal;
a data volume corresponding to a first PDU set of the terminal, wherein the first PDU set is a PDU set that currently needs to report a buffer size;
a BSR trigger condition of a current buffer status report BSR of the terminal.

23. The device according to claim 21, wherein the second information comprises one or more of following:
a BS interval range or a lower limit or an upper limit of a BS corresponding to a BS table configured by a network device or agreed by a protocol;
a BS table configured by a network device based on an LCH or an LCG or a PDU set;
a buffer size of each LCG or each LCH of the terminal;
a buffer size of each PDU Set or each type of PDU set of the terminal.

24. The device according to claim 22, wherein when the first information comprises the BS interval range or the lower limit or the upper limit of the BS corresponding to a BS table configured by the network device or agreed by a protocol, the processor is configured to implement one or more of the following:
comparing a buffer size of a LCG corresponding to the LCH having the highest priority with the BS interval range or the lower limit or the upper limit of the BS corresponding to the BS table, and determining, according to a result of the comparison the BS table used by the terminal;
comparing a buffer size of the LCG having the maximum buffer size with the BS interval range or the lower limit or the upper limit of the BS corresponding to the BS table, and determining, according to a result of the comparison, the BS table used by the terminal;
comparing the buffer size corresponding to the first PDU set with the BS interval range or the lower limit or the upper limit of the BS corresponding to the BS table, and determining, according to a result of the comparison, the BS table used by the terminal.

25. The device according to claim 22, wherein when the first information comprises a data volume of an LCG or an LCH or a PDU set with a current largest buffer size or with a highest priority of the terminal, the processor is configured to implement following:
comparing the data volume of the LCG or the LCH or the PDU set having the current largest buffer size or the highest priority of the terminal with a maximum BS value of the plurality of BS tables;
from the plurality of BS tables, selecting, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

26. The device according to claim 22, wherein when the first information comprises the data volume corresponding to a first PDU set of the terminal, the processor is configured to implement following:
comparing the data volume of the first PDU set with the maximum BS value of the plurality of BS tables;
from the plurality of BS tables, selecting, as the BS table used by the terminal, a BS table in which the maximum BS value is greater than or equal to the data volume of the first PDU Set and difference between the maximum BS value and a data volume of the first PDU set is minimum.

27. The device according to claim 22, wherein when the first information comprises the BSR trigger condition of the current BSR of the terminal, the processor is configured to further implement:
when the BSR trigger condition comprises that remaining PDU set delay budget (PSDB) of a PDU set is lower than a preset threshold, using a BS table corresponding to a second PDU set as the BS table used by the terminal, or determining the BS table used by the terminal according to the data volume in the second PDU set and the BS interval range or the lower limit or the upper limit of the BS corresponding to a BS table;
wherein the remaining PSDB of the second PDU set is lower than a preset threshold.

28. The device according to claim 23, wherein when the second information comprises the BS interval range or the lower limit or the upper limit of the BS corresponding to a BS table configured by the network device or agreed by the protocol, the processor is configured to further implement:
comparing the buffer size of each LCH or LCG or PDU set with the BS interval range or the lower limit or the upper limit of the BS;
determining, according to a result of the comparison, the BS table used by each LCH or LCG or PDU set.

29. The device according to claim 23, wherein when the second information comprises a buffer size of each LCG or each LCH of the terminal, the processor is configured to implement:
comparing the buffer size of each LCG or LCH with the maximum BS value of the plurality of BS tables;
from the plurality of BS tables, selecting, as the BS table used by the target object, a BS table in which the maximum BS value is greater than or equal to the buffer size of each LCG or LCH and difference between the maximum BS value and the buffer size of each LCG or LCH is minimum.

30. The device according to claim 23, wherein when the second information comprises the buffer size of each PDU set or each type of PDU set of the terminal, the processor is configured to further implement:
comparing the buffer size of each PDU set or each type of PDU set with the maximum BS value of the plurality of BS tables;
from the plurality of BS tables, selecting, as the BS Table used by the terminal, a BS table in which the maximum BS value is greater than or equal to the buffer size of each PDU set or each type of PDU set and difference between the maximum BS value and the buffer size of each PDU set or each type of PDU set is minimum.

31. The device according to claim 21, wherein the processor is further configured to implement:
adding first indication information in a buffer status report media access control control element (BSR MAC CE), wherein the first indication information is used to indicate a BS table corresponding to a BSR MAC CE of the terminal; or
adding, in a BSR MAC CE, second indication information for each LCG or each LCH or each PDU set, wherein the second indication information is used to indicate a BS table corresponding to BS information of each LCG or each LCH or each PDU set.

32. The device according to claim 21, wherein the first information and/or the second information are obtained from the network device in one or more of following manners:
radio resource control (RRC) signaling;
MAC CE;
physical layer signaling.

33. The device according to claim 32, wherein the first information and/or the second information carry one or more of following identification information:
identification information of the LCG;
identification information of the LCH;
identification information of the PDU Set.

34. The device according to claim 21, wherein the processor is further configured to implement:
triggering the BSR if one or more of following conditions are satisfied:
that a BS table used by the terminal changes;
that a BS table used by an LCG of the terminal changes;
that a BS table used by an LCH of the terminal changes;
that a BS table used by the PDU set of the terminal changes.

35. The device according to claim 21, wherein the processor is further configured to implement:
when BS information of different BS tables is carried through different BSR MAC CEs, identifying BS tables corresponding to different BSR MAC CEs through logical channel identifiers LCIDs in MAC subheaders corresponding to different BSR MAC CEs or indication fields in the MAC subheaders corresponding to different BSR MAC CEs.

36. An information processing device applied to a network device, wherein the device comprises a memory, a transceiver, and a processor;
the memory is configured to store a computer program; the transceiver is configured to send and receive data under the control of the processor; and the processor is configured to read the computer program in the memory and perform the following operations:
sending first information and/or second information to a terminal, wherein the first information is used by the terminal to determine, from a plurality of Buffer Status quantization tables (BS tables), a BS table used by the terminal, or the second information is used by the terminal to determine, from a plurality of BS tables, a BS table used by a target object, where the target object comprises one or more of the following:
a Logical Channel Group (LCG) of the terminal;
a Logical Channel (LCH) of the terminal;
a Packet Data Unit set (PDU Set) of the terminal.

37. The device according to claim 36, wherein the first information comprises one or more of the following:
a BS interval range or a lower limit or an upper limit of a BS corresponding to a BS table configured by a network device;
a BS table used by the terminal based on a configuration of the terminal by the network device;
a data volume of an LCG or an LCH or a PDU set with a current largest buffer size or with a highest priority of the terminal;
a data volume corresponding to a first PDU set of the terminal, wherein the first PDU set is a PDU set that currently needs to report a buffer size;
a BSR trigger condition of a current buffer status report BSR of the terminal.

38. The device according to claim 36, wherein the second information comprises one or more of the following:
a BS interval range or a lower limit or an upper limit of a BS corresponding to a BS table configured by a network device;
a BS table configured by a network device based on an LCH or an LCG or a PDU set;
a buffer size of each LCG or each LCH of the terminal;
a buffer size of each PDU Set or each type of PDU set of the terminal.

39. The device according to claim 36, wherein the processor is configured to further implement:
sending the first information and/or the second information to the terminal in one or more of the following manners:
RRC signaling;
MAC CE;
physical layer signaling.

40. The device according to claim 36, wherein
the first information and/or the second information carry one or more of following identification information:
identification information of the LCG;
identification information of the LCH;
identification information of the PDU Set.

41. An information processing device applied to a terminal, wherein the device comprises:
a first processing unit, configured to determine, from a plurality of Buffer Status quantization tables (BS tables) according to first information, a BS table used by the terminal; or determine, from a plurality of Buffer Status quantization tables (BS tables) according to second information, a BS table used by a target object, wherein the target object comprises one or more of following:
a Logical Channel Group (LCG) of the terminal;
a Logical Channel (LCH) of the terminal;
a Packet Data Unit set (PDU Set) of the terminal.

42. The device according to claim 41, wherein the first information comprises one or more of following:
a BS interval range or a lower limit or an upper limit of a BS corresponding to a BS table configured by a network device or agreed by a protocol;
a BS table used by the terminal based on a configuration of the terminal by the network device;
a data volume of an LCG or an LCH or a PDU set with a current largest buffer size or with a highest priority of the terminal;
a data volume corresponding to a first PDU set of the terminal, wherein the first PDU set is a PDU set that currently needs to report a buffer size;
a BSR trigger condition of a current buffer status report BSR of the terminal.

43. The device according to claim 41, wherein the second information comprises one or more of following:
a BS interval range or a lower limit or an upper limit of a BS corresponding to a BS table configured by a network device or agreed by a protocol;
a BS table configured by a network device based on an LCH or an LCG or a PDU set;
a buffer size of each LCG or each LCH of the terminal;
a buffer size of each PDU Set or each type of PDU set of the terminal.

44. The device according to claim 42, wherein iwhen the first information comprises the BS interval range or the lower limit or the upper limit of the BS corresponding to a BS table configured by the network device or agreed by a protocol, the first processing unit is further configured to one or more of the following:
compare a buffer size of a LCG corresponding to the LCH having the highest priority with the BS interval range or the lower limit or the upper limit of the BS corresponding to the BS table, and determine, according to a result of the comparison the BS table used by the terminal;
compare a buffer size of the LCG having the maximum buffer size with the BS interval range or the lower limit or the upper limit of the BS corresponding to the BS table, and determine, according to a result of the comparison, the BS table used by the terminal;
compare the buffer size corresponding to the first PDU set with the BS interval range or the lower limit or the upper limit of the BS corresponding to the BS table, and determine, according to a result of the comparison, the BS table used by the terminal.

45. The device according to claim 42, wherein when the first information comprises a data volume of an LCG or an LCH or a PDU set with a current largest buffer size or with a highest priority of the terminal, the first processing unit is further configured to:
compare the data volume of the LCG or the LCH or the PDU set having the current largest buffer size or the highest priority of the terminal with a maximum BS value of the plurality of BS tables;
from the plurality of BS tables, select, as the BS table used by the terminal, a BS table in which a maximum BS value is larger than or equal to the data volume of the LCG or the LCH or the PDU set having the current largest buffer size or the highest priority of the terminal and a difference between the maximum BS value and the data volume of the LCG or the LCH or the PDU set having the current largest buffer size or the highest priority of the terminal is minimum.

46. The device according to claim 42, wherein when the first information comprises the data volume corresponding to a first PDU set of the terminal, determining, from the plurality of BS tables according to the first information, the first processing unit is further configured to:
compare the data volume of the first PDU set with the maximum BS value of the plurality of BS tables;
from the plurality of BS tables, select, as the BS table used by the terminal, a BS table in which the maximum BS value is greater than or equal to the data volume of the first PDU Set and difference between the maximum BS value and a data volume of the first PDU set is minimum.

47. The device according to claim 42, wherein when the first information comprises the BSR trigger condition of the current BSR of the terminal, the first processing unit is further configured to:
when the BSR trigger condition comprises that remaining PDU set delay budget (PSDB) of a PDU set is lower than a preset threshold, using a BS table corresponding to a second PDU set as the BS table used by the terminal, or determining the BS table used by the terminal according to the data volume in the second PDU set and the BS interval range or the lower limit or the upper limit of the BS corresponding to a BS table;
wherein the remaining PSDB of the second PDU set is lower than a preset threshold.

48. The device according to claim 43, wherein when the second information comprises the BS interval range or the lower limit or the upper limit of the BS corresponding to a BS table configured by the network device or agreed by the protocol, the first processing unit is further configured to:
compare the buffer size of each LCH or LCG or PDU set with the BS interval range or the lower limit or the upper limit of the BS;
determine, according to a result of the comparison, the BS table used by each LCH or LCG or PDU set.

49. The device according to claim 43, wherein when the second information comprises a buffer size of each LCG or each LCH of the terminal, the first processing unit is further configured to:
compare the buffer size of each LCG or LCH with the maximum BS value of the plurality of BS tables;
from the plurality of BS tables, select, as the BS table used by the target object, a BS table in which the maximum BS value is greater than or equal to the buffer size of each LCG or LCH and difference between the maximum BS value and the buffer size of each LCG or LCH is minimum.

50. The device according to claim 43, wherein when the second information comprises the buffer size of each PDU set or each type of PDU set of the terminal, the first processing unit is further configured to:
compare the buffer size of each PDU set or each type of PDU set with the maximum BS value of the plurality of BS tables;
from the plurality of BS tables, select, as the BS Table used by the terminal, a BS table in which the maximum BS value is greater than or equal to the buffer size of each PDU set or each type of PDU set and difference between the maximum BS value and the buffer size of each PDU set or each type of PDU set is minimum.

51. The device according to claim 41, further comprising:
a second processing unit, configured to
add first indication information in a buffer status report media access control control element (BSR MAC CE), wherein the first indication information is used to indicate a BS table corresponding to a BSR MAC CE of the terminal; or
add, in a BSR MAC CE, second indication information for each LCG or each LCH or each PDU set, wherein the second indication information is used to indicate a BS table corresponding to BS information of each LCG or each LCH or each PDU set.

52. The device according to claim 41, wherein
the first information and/or the second information are obtained from the network device in one or more of following manners:
radio resource control (RRC) signaling;
MAC CE;
physical layer signaling.

53. The device according to claim 52, wherein
the first information and/or the second information carry one or more of following identification information:
identification information of the LCG;
identification information of the LCH;
identification information of the PDU Set.

54. The device according to claim 41, further comprising:
a third processing unit, configured to trigger the BSR if one or more of following conditions are satisfied:
that a BS table used by the terminal changes;
that a BS table used by an LCG of the terminal changes;
that a BS table used by an LCH of the terminal changes;
that a BS table used by the PDU set of the terminal changes.

55. The device according to claim 41, further comprising:
a fourth processing unit, configured to: when BS information of different BS tables is carried through different BSR MAC CEs, identify BS tables corresponding to different BSR MAC CEs through logical channel identifiers LCIDs in MAC subheaders corresponding to different BSR MAC CEs or indication fields in the MAC subheaders corresponding to different BSR MAC CEs.

56. An information processing device applied to a network device, wherein the information processing device comprises:
a first sending unit, configured to send first information and/or second information to a terminal, wherein the first information is used by the terminal to determine, from a plurality of Buffer Status quantization tables (BS tables), a BS table used by the terminal, or the second information is used by the terminal to determine, from a plurality of BS tables, a BS table used by a target object, where the target object comprises one or more of the following:
a Logical Channel Group (LCG) of the terminal;
a Logical Channel (LCH) of the terminal;
a Packet Data Unit set (PDU Set) of the terminal.

57. The device according to claim 56, wherein the first information comprises one or more of the following:
a BS interval range or a lower limit or an upper limit of a BS corresponding to a BS table configured by a network device;
a BS table used by the terminal based on a configuration of the terminal by the network device;
a data volume of an LCG or an LCH or a PDU set with a current largest buffer size or with a highest priority of the terminal;
a data volume corresponding to a first PDU set of the terminal, wherein the first PDU set is a PDU set that currently needs to report a buffer size;
a BSR trigger condition of a current buffer status report BSR of the terminal.

58. The device according to claim 56, wherein the second information comprises one or more of the following:
a BS interval range or a lower limit or an upper limit of a BS corresponding to a BS table configured by a network device;
a BS table configured by a network device based on an LCH or an LCG or a PDU set;
a buffer size of each LCG or each LCH of the terminal;
a buffer size of each PDU Set or each type of PDU set of the terminal.

59. The device according to claim 56, wherein the first sending unit is further configured to:
send the first information and/or the second information to the terminal in one or more of the following manners:
RRC signaling;
MAC CE;
physical layer signaling.

60. The device according to claim 56, wherein the first information and/or the second information carry one or more of following identification information:
identification information of the LCG;
identification information of the LCH;
identification information of the PDU Set.

61. A processor-readable storage medium, wherein the processor-readable storage medium stores a computer program, and the computer program is configured to cause a processor to perform the method according to any one according to claims 1-20.
